Europäisches Patentamt

European Patent Office

Office européen des brevets

(19)

(11) Publication number: **0 094 477**
**B1**

(12) EUROPEAN PATENT SPECIFICATION

(45) Date of publication of patent specification: **18.06.86**

(51) Int. Cl.⁴: **H 01 S 3/03, H 01 S 3/05**

(21) Application number: **83101553.2**

(22) Date of filing: **18.02.83**

(54) Laser system with interchangeable plasma chambers.

(30) Priority: **23.02.82 US 351424**

(43) Date of publication of application:
**23.11.83 Bulletin 83/47**

(45) Publication of the grant of the patent:
**18.06.86 Bulletin 86/25**

(84) Designated Contracting States:
**AT BE CH DE FR GB IT LI LU NL SE**

(56) References cited:
**FR-A-2 175 662**
**US-A-3 781 709**
**US-A-4 201 951**

(73) Proprietor: **Javan, Ali**
**Laser Science Inc. 80 Prospect Street**
**Cambridge Massachusetts 02139 (US)**

(72) Inventor: **Javan, Ali**
**Laser Science Inc. 80 Prospect Street**
**Cambridge Massachusetts 02139 (US)**

(74) Representative: **Strasse, Joachim, Dipl.-Ing.
et al
Strasse und Stoffregen European Patent
Attorneys Zweibrückenstrasse 17
D-8000 München 2 (DE)**

Courier Press, Leamington Spa, England.

## Description

Background of the invention
Field of the invention

This invention relates to gas lasers having a sealed plasma chamber using either pure or mixed atomic or molecular gases. More particularly, it relates to such lasers in which the sealed plasma chamber may be replaced by another of the same class by relatively unskilled personal without a need for optically realigning the system to obtain oscillation.

Discussion of the prior art

In general, gas lasers are constructed with a plasma chamber containing a selected gas or mixture of gases, and a set of electrodes that produce a high-intensity current that excites the atoms or molecules to high energy state. A pair of optical mirrors, which may be within or external to the plasma chamber envelope, are provided to produce regeneration, hence causing laser oscillation. The mirrors must be aligned accurately to cause regeneration. The aligned mirrors form the resonator for the gas laser.

Such gas lasers have been used to obtain laser oscillations in many different configurations using various atomic and molecular gases. The output spectra that are available cover a wide electromagnetic spectrum extending from the far infrared into the visible and near ultraviolet and have power capabilities from a few milliwatts to the megawatt region.

The practical applications of such lasers have been limited by a number of factors. Many kinds of lasers are effectively limited to laboratory usage because they cannot be operated in a sealed off condition without an auxiliary pumping system that either intermittently or continuously replenishes the gaseous medium. In molecular gas lasers, the composition of the gaseous medium gradually changes under operating conditions caused by molecular disassociation, giving rise to the requirement for the introduction of fresh gases into the envelope as used gases are removed. The life of a laser having a sealed envelope may also be limited by gaseous reactions or decomposition within the plasma chamber that deteriorate the optical quality of the windows. For the most part, only inert gas lasers, such as Helium-Neon, and Argon, Krypton and other inert gas ion lasers have been practical for operation over an extended period of time as sealed-off units.

The expense associated with the use of many lasers is a critical factor in commercial applications. For example, there are Helium-Neon lasers which can be manufactured at relatively low cost and which are capable of operation under sealed conditions for a relatively long period of time. When the plasma chamber in such a laser finally fails, it may be more practical and economical to discard the entire unit rather than to replace the plasma chamber and realign the optical resonator to obtain oscillation.

In certain higher power and more expensive sealed inert gas lasers, the costs of the plasma chamber and the auxiliary equipment are high. When failure occurs in these more expensive laser systems, the plasma chamber is usually replaced, but that replacement requires skilled personnel because of the high voltages involved and the need for precise optical realignment. Nevertheless, such sealed inert-gas lasers are used commercially because the operating life is sufficiently long to justify the cost of replacement of the plasma chamber. FR—A—2175662 discloses a laser in which the pump tube is replaceable by a new one.

That is not true of molecular and most other gas lasers which have a more limited life under sealed operating conditions. For example, in lasers using carbon dioxide, excitation of the plasma causes disassociation of the gas molecules into carbon monoxide and oxygen. Such lasers are provided with a pumping station and the necessary auxiliary equipment to allow operation with a continuous gas flow. Recent developments in the use of catalysts to regenerate the carbon dioxide have lengthened the life of such sealed lasers, but commercial units still require a flow of make-up gas to achieve acceptable operating life.

Similar and more serious problems arise with gas lasers using halides, for such gases are corrosive and surface reactions reduce the effectiveness of the optical windows. The resulting short life requires that these lasers also be provided with continuiing gas replenishment and, in addition, means must be provided for collecting the corrosive used gases.

The commercial application of many kinds of prior art lasers requiring replenishment of the used gas in the plasma chamber generally require a bulky gas handling system.

Summary of the invention

In accordance with the present invention a gas laser is provided in which the plasma chamber can be quickly and easily replaced by relatively unskilled personnel. This feature makes it possible to use sealed plasma chambers in cases where the sealed chamber has a long shelf life, but gradual deterioration occurs when the plasma chamber is operated to obtain oscillations. In many applications such lasers are operated only intermittently. With the elimination of the gas handling system, it becomes possible to manufacture a compact, and in some important cases, portable and light weight lasers. The invention is addressed to lasers operating at low to medium power output and is not broadly applicable to very high energy lasers.

The sealed plasma chamber includes the usual high voltage electrodes and optical windows. To make chamber replacement possible without need for elaborate optical realignment, one section of a mating mechanical coupler is secured to the envelope of the demountable plasma chamber and is positioned in a predetermined spatial and angular position with respect to the electrodes optical windows and the optical axis of the plasma chamber. The positioning of the mechanical coupler with respect to the electrodes, the windows and the optical axis is identical for each of the interchangeable plasma chambers. A separate base on which the resonator mirrors are mounted, and which may carry the electrical connecting joints to the electrodes, the power supply and auxiliary equipment, is provided with the other section of the mating coupler fixed in a precise predetermined spatial and angular position with respect to a pair of mirrors mounted on the base. The position of this section of the mechanical coupler with respect to the mirrors is identical for each of the interchangeable bases. Each base and each plasma chamber is thus interchangeable with any other similarly aligned unit. When a plasma chamber fails, it is easily replaced by merely disconnecting the old chamber from the base and inserting the replacement. The predetermined positions of the two coupler sections, one with respect to the electrodes and optical axis of the plasma chamber and the other with respect to the two mirrors, precisely locates the replacement chamber in position with sufficient accuracy to produce laser oscillations without elaborate adjustment. In important cases, the sealed plasma chamber containing an optimum laser gas mixture can be manufactured at low cost. This feature makes it possible to discard the used chamber and conveniently replace it with another one. More expensive chambers, such as in molecular lasers using rare isotropic species or those requiring elaborate electrode configuration, can be returned to the factory for reconditioning while the replacement chamber is in service.

This ability to replace a sealed plasma chamber while retaining the mirrors, power supply and auxiliary equipment, makes it feasible to use lasers in many applications where cost restrictions or conditions of use now rule out their application. Advantage is taken here of the fact that plasma chambers of the types that have a relatively short life under actual operating conditions, may have a satisfactorily long shelf life in an inactive condition. Thus, even these so-called short-lived plasma chambers become feasible for use in many non-laboratory applications.

The invention also permits different plasma chambers containing different gases but belonging to the same class of lasers to be used with a common base, thus providing greater versatility of application at minimum cost.

In one embodiment of the invention, the base supports a folded storage capacitor that serves as a Blumlein circuit. The capacitor is formed in two sections positioned in spaced parallel configuration and extending on either side of the plasma chamber. The plasma chamber is in the form of a block of non-conducting impervious material having flat surfaces that are adjacent the inner condenser plates of the capacitor.

In another embodiment, one mirror is incorporated into the replaceable plasma chamber and a second mirror is positioned on the base.

Brief description of the drawings

Figure 1 is an elevation of an interchangeable plasma chamber in accordance with the present invention;

Figure 2 is a diagrammatic elevation, partly in section along the line A—A of Figure 3, illustrating the plasma chamber in position on its base;

Figure 3 is a side view of the laser system of Figure 2 with part of the structure cut away to show the plasma chamber construction and partly in section along line B—B of Figure 2 to illustrate the arrangement of a gas switch;

Figure 4 is a partial view illustrating one method of mirror mount and adjustment; and

Figure 5 is a partial view similar to Figure 1 illustrating a plasma chamber incorporating one mirror and one window.

Description of the preferred embodiments

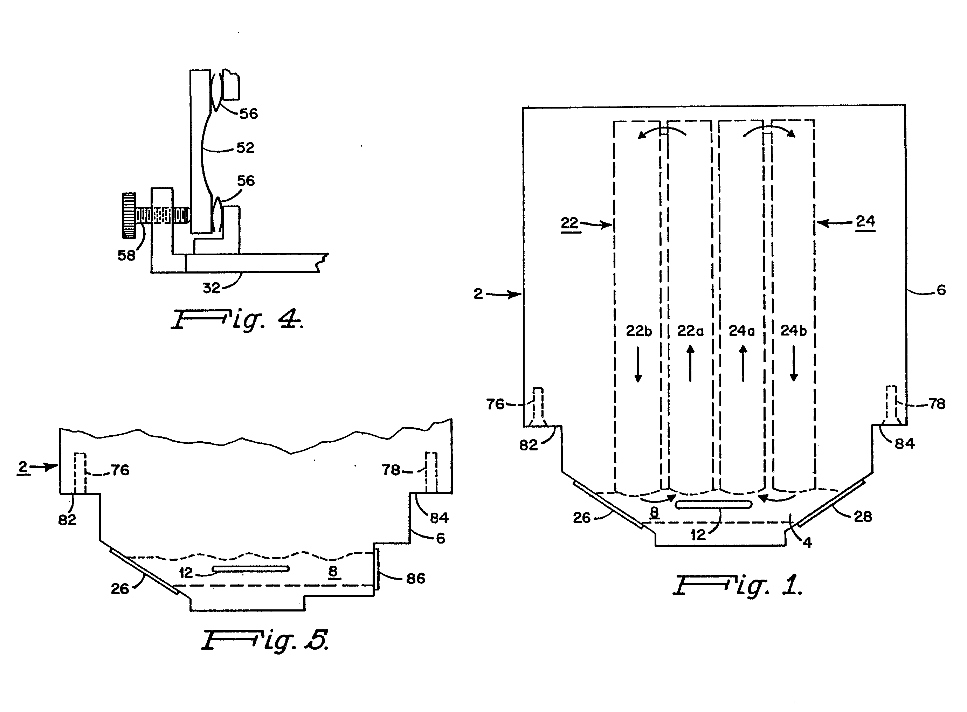

An illustrated in Figure 1, an interchangeable plasma chamber, generally indicated at 2, includes a sealed envelope 4 formed in a block 6 of non-conductive impervious material. In this example, the block 6 is formed of a methacrylate plastic of the kind sold under the trademark Plexiglas. A plasma cavity 8 is formed by a bore extending transversely through the lower portion of the block 6. A pair of electrodes 12 and 14 (see also Figure 3) are positioned in the chamber. The electrode 12 includes a rectangular base 16 that is seated in a slot in the block 6 that extends from the exterior wall of the block 6 into the cavity 8. The outer surface of the base 16 is coincident with the adjacent surface of the block 6 and provides a contact surface for the electrode 12. The opposed electrode 14 is identical in configuration with a similar base 18 that is exposed on the opposite side of the block 6.

Two pairs of vertical cooling ducts, generally indicated at 22 and 24, formed within the block 6, open into the mechanism. The lower end of a duct 22a is positioned adjacent the electrodes 12 and 14, where the most heat is generated, and opens at its upper end into a return duct 22b that also opens into the cavity 8 at a point farther removed from the electrodes. The heated gas flows upwardly through the duct 22a and returns after cooling through the duct 22b. The other pair of ducts 24a and 24b operate in the same manner with the gas flowing upwardly through the duct 24a and returning to the cavity 8 through the duct 24b.

The lower section of the block 6 is tapered to form a Brewster angle at each end of the cavity 8. Two windows 26 and 28 are cemented respectively to the opposing tapered surfaces of the block 6 and extend over the ends of the cavity 8.

The plasma chamber is filled with a gas or a mixture of gases suitable for a particular laser. The choice of pressure and the selection of gases, and the selection of materials and Brewster angles for the windows 26 and 28 will be made by those familiar with lasers to best suit the particular characteristics desired.

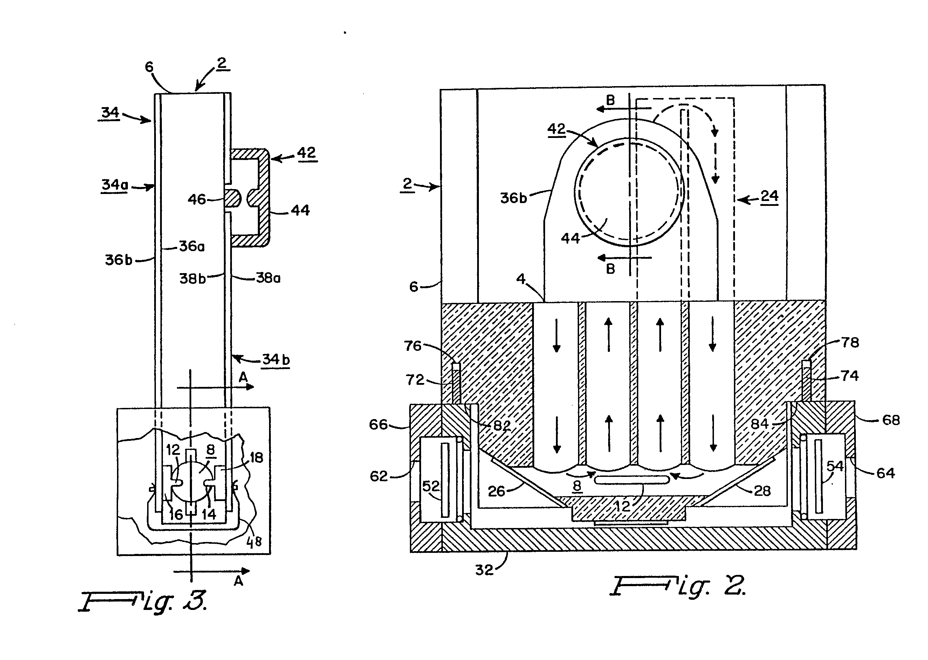

The interchangeable plasma chamber 2 shown in Figure 1 is inserted into a base 32, as shown in Figures 2 and 3. The base 32 is in the form of a rectangular tray, formed of heavy aluminum or other rigid material, with upstanding sides that surround the lower portion of the plasma chamber 2.

The base 32 carries a storage capacitor, generally indicated at 34, in the form of a Blumlein printed circuit. A first section 34a of the capacitor is formed by a printed circuit having two layers 36a and 36b of copper, that form the plates of the capacitor, on opposite sides of a dielectric panel. A second capacitor section 34b is formed by a similar printed circuit board comprising two copper layers 38a and 38b separated by a dielectric panel.

A gas switch, generally indicated at 42, is carried by the panel 34b with an outer cup-shaped electrode shell 44 connected around its perimeter to the rim of an opening of similar size in the condenser plate 38a. A second switch electrode 46 is secured to the condenser plate 38b and extends into the electrode shell 44. The composition of the gas within the switch and the details of construction of the switch are well known and are not repeated here. A suitable power supply (not shown) will be connected to the capacitor 34.

The two capacitor sections 34a and 34b are supported in spaced face-to-face relationship by the base 32 from which they are suitably insulated. When the plasma chamber 2 is inserted into the base 32, it slides between the capacitor sections 34a and 34b with the electrode bases 16 and 18 making electrical contact respectively with the inner condenser plates 36a and 38b. Adequate electrical contact is insured by a spring clip 48 that also serves as an electrical conductor between the outer condenser plates 36b and 38a.

The gas switch 42, which may be a high-speed pressurized spark gap, may for selected applications be secured to the replaceable plasma chamber with appropriate means for making electrical connections when the plasma chamber is inserted in the base. In another arrangement, the Blumlein capacitors may be affixed to the plasma chamber rather than to the base. The structure is thus flexible in design in that any combination of these components, or any other component of the laser system that may have a short life, may be selected to be discarded with the used plasma chamber.

The base 32 carries two mirrors 52 and 54, as illustrated diagrammatically in Figure 2. These mirrors, which may have either plane or curved reflecting surfaces, are supported in any desired manner that will allow the mirrors to be adjusted and then locked in that position. For example, as indicated diagrammatically in the partial view of Figure 4, the mirror 52 may be positioned between a series of spring supports 56 and a number of adjusting screws 58 that will permit the mirror to be adjusted to any angle and then locked in that position. Each of the spring supports 56 may be formed of a pair of Belleville washers in opposing face-to-face relationship. Two openings 62 and 64 in alignment with the optical axis are provided in the end walls 66 and 68 of the base 32.

To insure precise positioning of the plasma chamber 2 with respect to the mirrors 52 and 54, a pair of hardened metal pins 72 and 74, extending upwardly from the base 32, engage precisely positioned openings 76 and 78 (Figure 1) that extend upwardly in the block 6 from two horizontal shoulders 82 and 84 formed on the block 6. The pins 72 and 74 insure precise lateral positioning of the plasma chamber 2. In addition, the shoulders 82 and 84 are precisely positioned with respect to the electrodes 12 and 14, the windows 26 and 28, and the optical axis. When the plasma chamber is inserted into the base 32, with the pins 72 and 74 engaging the openings 76 and 78, the shoulders 82 and 84 abut the upper surfaces of the base 32 which are in turn precisely positioned with respect to the two mirrors 52 and 54.

Any desired means may be employed for mounting the plasma chamber on the base, the requirement being for a mechanical coupling having two mating sections, one section affixed to or forming a part of the base and precisely positioned with respect to the mirrors, and the other section affixed to or forming part of the plasma chamber and precisely positioned with respect to the electrodes, the windows and the optical axis of the plasma chamber.

In manufacture, each interchangeable plasma chamber is fabricated with exactly the same spatial and angular relationship between its section of the mechanical coupling, (which in this case comprises the openings 76 and 78 and the shoulders 82 and 84) and the electrodes, windows and optical axis. Each interchangeable base is fabricated with exactly the same spatial and angular relation between its section of the mechanical coupling (which in this case comprises the pins 72 and 74 and the surfaces of the base 32 adjacent the pins 72 and 74) and the two mirrors 52 and 54. These relationships are established such that upon insertion of the plasma chamber into the base, the unit is capable of generating laser oscillations.

The precision with which the dimensional accuracy must be controlled depends upon the particular characteristics of the laser being used. In general, accuracies readily attainable in production will be adequate to enable laser oscillations to be produced either without optical adjustment or with only minor adjustment of the mirrors.

The plasma chamber 2 may, if desired, be fabricated with one mirror and one window, in which case the base carries only a single mirror. Such an arrangement is illustrated in the partial view of Figure 5. A mirror 86, cemented to a vertical surface of the block 6 at the end of the cavity 8, replaces the mirror 54 on the base 32. The window 28 is eliminated. Only the mirror 52 is carried by the base 32. The operation is essentially the same as described previously with the obvious adjustment in the mounting relationships of the section of the coupling means on the plasma chamber to include the mirror now mounted on the plasma chamber.

## Claims

1. Gas laser comprising a plasma chamber (2) with a sealed envelope (4) containing a laser medium, high-voltage electrodes (12, 14) within the envelope (4), at least one optical window (26, 28) in the envelope (4), said envelope (4) including mechanical coupling means (76, 78, 82, 84) having a predetermined spatial relationship and orientation with respect to the electrodes (12, 14) and the window (26, 28), a base (32) for the plasma chamber (2) with at least one mirror (52, 54) mounted thereon, said base (32) having mechanical mounting means (32, 72, 74) arranged to releasably receive and couple with the mechanical coupling means (76, 78, 82, 84) and having a predetermined spatial relationship and orientation with respect to the mirror (52, 54), wherein the mechanical mounting means (32, 72, 74) and coupling means are arranged when coupled together to position the mirror (52, 54) and the envelope (4) relative to each other to permit laser oscillations, whereby the plasma chamber (2) may be removed and replaced into said base (32) without need for optical realignment.

2. A laser system as claimed in Claim 1 including two of said optical windows (26, 28) in said envelope (4), and two of said mirrors (52, 54) mounted on said base (32).

3. A laser system as claimed in Claim 1 including pulse generating (34, 42) means carried by said base (32) and arranged to be releasably coupled to said electrodes (12, 14).

4. A laser system as claimed in Claim 3 wherein said pulse generating means includes a pair of transmission type capacitors (34a, b) disposed on opposite sides of said envelope (4), and means for short circuiting one of said capacitors.

5. A laser system as claimed in Claim 4 wherein said envelope (4) comprises a block (6) of insulating material having opposing flat surfaces (36a, 38b).

6. A laser system as claimed in Claim 5 wherein each of said transmission type capacitors (34a, b) is positioned adjacent one of said flat surfaces (36a, 38b) of said envelope (4).

7. A laser system as claimed in Claim 6 wherein said base includes a mirror mount supporting at least one of said mirrors (52), and mirror adjusting means (58) arranged to adjust the angle of said mirror relative to said base (32) and including means for locking said mirror in fixed position.

8. A laser system as claimed in Claim 7 including first and second connection means (16, 18) each in electrical contact with one of said electrodes (12, 14) and having an exposed surface on one of said flat surfaces (36a, 38b) of said envelope (4), first and second contact means arranged to releasably engage respectively said first and second connection means, and spring means arranged to maintain pressure between said respective connection means and said contact means.

## Patentansprüche

1. Gaslaser, der folgende Teile umfaßt:

— eine Plasmakammer (2) mit einer abgedichteten Hülle (4), die ein Lasermedium enthält,

— Hochspannungselektroden (12, 14) in der Hülle (4),

— mindestens ein optisches Fenster (26, 28) in der Hülle (4),

— mechanische Anschlußvorrichtungen (76, 78, 82, 84), die in der Hülle (4) enthalten sind, wobei diese eine vorgegebene Raumanordnung und -orientierung unter Berücksichtigung der Elektroden (12, 14) und des Fensters (26, 28) haben,

— eine Grundplatte (32) für die Plasmakammer (2) mit mindestens einem darauf montierten Spiegel (52, 54), wobei die Grundplatte mechanische Befestigungsvorrichtungen (32, 72, 74) aufweist, die zu lösbarer Aufnahme und lösbarem Anschluß mit den mechanischen Anschlußvorrichtungen (76, 78, 82, 84) vorgesehen sind und eine vorgegebene Raumanordnung und—orientierung im Hinblick auf den Spiegel (52, 54) haben, wobei die mechanischen Befestigungsvorrichtungen (32, 72, 74) und Anschlußvorrichtungen (76, 78, 82, 84) im zusammengefügten Zustand derartig ausgestaltet sind, daß die Anordnung des Spiegels (52, 54) und der Hülle (4) zueinander Laseroszillationen zuläßt, wobei die Plasmakammer (2) wieder herausgenommen oder in die Grundplatte (32) wieder eingebaut werden kann, ohne daß eine nachträgliche optische Ausrichtung durchgeführt werden muß.

2. Ein Lasersystem nach Anspruch 1, das zwei optische Fenster (26, 28) in der Hülle (4) und zwei Spiegel (52, 54), die auf der Grundplatte (32) angebracht sind, aufweist.

3. Ein Lasersystem nach Anspruch 1, das zwei Pulsgeneratoren (34, 42) aufweist, die von der Grundplatte (32) getragen werden und die derart ausgestaltet sind, daß sie lösbar mit den Elektroden (12, 14) verbunden werden können.

4. Ein Lasersystem nach Anspruch 3, in welchem die Pulsgeneratorvorrichtung ein Paar Kondensatoren (34a, b) vom Übertragungstyp beinhalten, die auf den gegenüberliegenden Seiten der Hülle (4) liegen, und Vorrichtungen zum Kurzschließen von einem der Kondensatoren.

5. Ein Lasersystem nach Anspruch 4, worin die Hülle (4) einen Block (6) aus isolierendem Material umfaßt, der gegenüberliegende flache Oberflächen (36a, 38b) aufweist.

6. Ein Lasersystem nach Anspruch 5, worin jeder der Kondensatoren (34a, b) vom Übertragungstyp jeweils gegenüber einer der flachen Oberflächen (36a, 38b) der Hülle (4) angeordnet ist.

7. Ein Lasersystem nach Anspruch 6, wobei die Grundplatte folgende Teile aufweist:

— eine Spiegelhalterung, die mindestens einen Spiegel (52) hält,
— Spiegeljustiervorrichtungen (58), die dazu geeignet sind, den Winkel einzustellen, den der Spiegel mit der Grundplatte (32) einschließt und
— Vorrichtungen zum Arretieren eines Spiegels in einer festen Position.

8. Ein Lasersystem nach Anspruch 7, das erste und zweite Verbindungsglieder (16, 18) aufweist, die in elektrischem Kontakt mit einer der Elektroden (12, 14) stehen und eine freiliegende Oberfläche auf einer der flachen Oberflächen (36a, 38b) der Hülle (4) haben, erste und zweite Kontaktglieder, die zur lösbaren Verbindung mit jeweils dem ersten und zweiten Verbindungsglied dienen, und Federn aufweist, die einen Druck zwischen den sich entsprechenden Verbindungs- und Kontaktgliedern aufrechterhalten.

**Revendications**

1. Laser à gaz comprenant une chambre à plasma (2) avec une enveloppe étanche (4) contenant un milieu laser, des électrodes à haute tension (12, 14) au sein de l'enveloppe (4), au moins une fenêtre optique (26, 28) dans l'enveloppe (4), un moyen de raccordement mécanique (76, 78, 82, 84), pourvu sur ladite enveloppe (4) et prévu selon une relation et orientation spatiales prédéterminées par rapport aux électrodes (12, 14) et à la fenêtre (26, 28), une base (32), destinée à la chambre à plasma (2), contenant au moins un miroir (52, 54) monté sur ladite base (32), un moyen de montage mécanique (32, 72, 74), prévu selon une relation et orientation spatiales prédéterminées par rapport au miroir (52, 54) et disposé de manière à recevoir et se connecter au moyen de raccordement mécanique (76, 78, 82, 84) de façon à pouvoir être libéré par la suite, caractérisé en ce que le moyen de montage mécanique (32, 72, 74) et le moyen de raccordement mécanique (76, 78, 82, 84) sont disposés, lorsqu'ils se trouvent insérés l'un das l'autre, de manière à positionner le miroir (52, 54) et l'enveloppe (4) l'un par rapport à l'autre en vue de permettre des oscillations laser, et en ce que la chambre à plasma (2) peut être enlevée et replacée dans ladite base (32) sans requérir un nouveau réglage optique.

2. Système laser suivant la revendication 1 comportant deux desdites fenêtres optiques (26, 28) dans ladite enveloppe (4) et deux desdits miroirs (52, 54) installés sur ladite base (32).

3. Système laser suivant la revendication 1 comportant un système générateur d'impulsions (34, 42) supporté par ladite base (32) et disposé de manière à se connecter aux dites électrodes (12, 14) de façon à pouvoir en être libéré par la suite.

4. Système laser suivant la revendication 3 dans lequel ledit système générateur d'impulsions comprend une paire de condensateurs du type à transmission (34a, b) disposés de part et d'autre de ladite enveloppe (4), ainsi qu'un moyen permettant la mise en court-circuit d'un desdits condensateurs.

5. Système laser suivant la revendication 4 dans lequel ladite enveloppe (4) comprend un bloc (6) de matière isolante, possédant des surfaces planes opposées (36a, 38b).

6. Système laser suivant la revendication 5 dans lequel chacun desdits condensateurs du type à transmission (34a, b) est positionné de manière contiguë à une desdites surfaces planes (36a, 38b) de ladite enveloppe (4).

7. Système laser suivant la revendication 6 dans lequel ladite base (32) comprend un support de miroir maintenant au moins un desdits miroirs (52), et un système de réglage du miroir (58) disposé de manière à permettre le réglage de l'angle dudit miroir par rapport à ladite base (32) et comprenant un moyen de blocage dudit miroir en position fixe.

8. Système laser suivant la revendication 7 comprenant un premier et un second moyen de connexion (16, 18), chacun en contact électrique avec une desdites électrodes (12, 14) et possédant une surface exposée contre une desdites surfaces planes (36a, 38b) de ladite enveloppe (4), un premier et second moyen de contact disposé de manière à s'insérer respectivement dans lesdits premier et second moyens de connexion de de façon à pouvoir être libérés par la suite, et un dispositif à ressort monté de manière à exercer une pression entre respectivement lesdits moyens de connexion et lesdits de contact.

Fig. 1.

Fig. 4.

Fig. 5.

0 094 477

Fig. 3.

Fig. 2.